# EUROPEAN PATENT SPECIFICATION

(11) **EP 1 744 617 B1**
(45) Date of publication and mention of the grant of the patent: **18.03.2009**
(21) Application number: 05738928.0
(22) Date of filing: 28.04.2005
(51) Int. Cl.: A01K 3/00, E04H 17/00

(54) **ANIMAL BARRIER DEVICE**
TIERSPERRENVORRICHTUNG
DISPOSITIF DE CLOTURE POUR ANIMAUX

(30) Priority: 29.04.2004 GB 0409574
(43) Date of publication of application: 24.01.2007
(73) Proprietor: Farmer, Andrew, Faygate Horsham West Sussex RH12 4SE (GB)
(72) Inventor: Farmer, Andrew, Faygate Horsham West Sussex RH12 4SE (GB)
(74) Representative: Bridge-Butler, Alan James
(86) International application number: PCT/GB2005/001633
(87) International publication number: WO 2005/104827

(56) References cited:
- DE-A- 2 206 436
- US-A- 5 143 354

## Description

This invention relates to an animal barrier device, for use particularly, but not exclusively, with pet cats.

It is often desired to prevent a pet, in particular a cat, from leaving the confines of a private garden or compound for safety reasons. However, domestic house cats can scale traditional walls of fences with ease.

Many properties are provided with medium or large sized gardens, which may require a considerable length of fencing to enclose them. It would therefore be expensive to construct an entire fence which could not be scaled by an animal.

US 5143354 in the name of NOLAN discloses an attachment to a fence comprising a freely rotatable roller, which yields under the weight of a dog, and prevents the dog from climbing over the fence. The roller is mounted on a support rod, which is about half the diameter of the roller, and as such the roller hangs on the rod, and is free to rotate, swing back and forth and move up and down. When the roller rotates, it does so about various axes contained within the diameter of the support rod.

This arrangement suffers from a number of drawbacks. Firstly, the roller can only move laterally a distance about half its diameter. As such, when an animal contacts the roller, it does not move away from them very far. Secondly, a clearance gap is required between the top of the fence and the device to allow the roller to hang down off the support rod. If the roller is pushed upwards, this gap opens up, and a cat, which is far more athletic and flexible than a dog, could breach it.

The present invention is intended to overcome some of the above problems.

Therefore, according to a first aspect of the present invention an animal barrier device comprises a construction, one or more elongate rotating bodies and fixture means mounted on said construction, in which the fixture means support the one or more rotating bodies such that they are rotatable on a longitudinal axis, characterised in that the fixture means comprises axle means adapted to support the one or more rotating bodies such that they are rotatable about a longitudinal axis extending along their centre, and in which the fixture means further comprises base means adapted to movably support the axle means such that in use the axle means are movable back and forth along a line substantially normal to said longitudinal axis.

It will be appreciated that the animal barrier could be located on any construction, for example a window frame or other ledge. However in a preferred embodiment the animal barrier can be disposed on the top of a wall or fence.

It will also be appreciated that a single rotating body could be used if the wall or fence were short in length. However, in a preferred construction the animal barrier comprises a number of rotating bodies, and said rotating bodies can be arranged in a row along the top of the wall or fence.

The rotating bodies can be cylindrical. A clearance between the top of the wall or fence and the one or more rotating bodies can be too small for a cat to breach.

In one construction each rotating body can by wider that the width of the fence or wall, and in a preferred arrangement the base means can movably support the axle means such that each rotating body can move between a first position where a first side is level with a first side of the wall or fence, and a second position where a second side is level with a second side of the wall or fence.

With this arrangement each rotating body can only move back and forth to such an extent that no ledge is provided before or behind it, upon which an animal may be able to gain a purchase.

Preferably the base means comprises at least two base units, one at each end of each rotating body, and the axle means can comprises a spigot extending from each base unit, which can co-operate with a socket at each end of each rotating body. In another embedment the axle means can further comprise bearing means to improve the rotational support and movement of the rotating elements. In one construction the rotating bodies can be provided with a continuous aperture through their centre, such that the socket at each end comprises the part of the aperture adjacent each end.

In one embodiment the base units can be attached in use to the top of the wall or fence in a spaced apart manner, with rotating bodies disposed there between. With this arrangement there can be spaces between each rotating body. Therefore, the animal barrier can further comprise round or elliptical elements which are disposed between each rotating element. The round or elliptical elements can be shaped or dimensioned such that an animal could not perch thereon.

The base units can be attached in use to fence posts which are spaced apart along the length of the fence. In a preferred construction the base units may comprise a fence post cap, provided with screw holes to fix it to the top of a fence post, at least one axle means on one side, and a round or elliptical element on the top.

Preferably the rotating bodies can be provided from long strips of cylindrical material, which are cut to fit the spaces between the fence posts of a fence.

It will be appreciated that an animal barrier device as described above includes a fence or wall, but it is also possible to sell a kit of parts for converting an existing fence or wall into an animal barrier device as described above.

Therefore, according to a second aspect of the present invention a kit of parts for use in constructing an animal barrier device is provided, in which the kit of parts comprises one or more elongate rotating bodies and fixture means, in which the kit of parts is adapted to form a part of an animal barrier device comprising a construction, one or more elongate rotating bodies and fixture means mounted on said construction, in which the fixture means support the one or more rotating bodies such that they are rotatable on a longitudinal axis, characterised in that the fixture means comprises axle means adapted to support the one or more rotating bodies such that they are rotatable about a longitudinal axis extending along their centre, and in which the fixture means further comprises base means adapted to movably support the axle means such that in use the axle means are movable back and forth along a line substantially normal to said longitudinal axis.

The invention can be performed in various ways, but one embodiment will now be described by way of example and with reference to the accompanying drawings in which:
Figure 1 is a front view of a section of an animal barrier according to the present invention; and,
Figures 2a to 2c are cross-sectional side views of the animal barrier as shown in Figure 1.

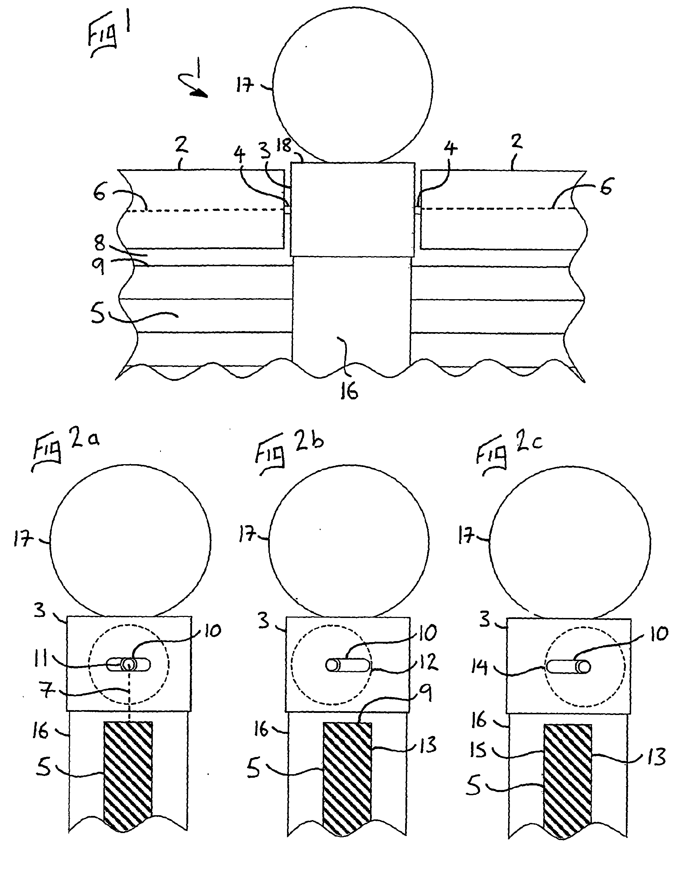

As shown in Figure 1 animal barrier device 1 comprises a construction, in the form of fence 5, a number of elongate rotating bodies 2 and fixture means, in the form of fence post cap 3 and axles 4, mounted on said construction 5. As described further below, the axles 4 support the rotating bodies 2 such that they are rotatable on a longitudinal axis 6 which extends along their centre, and the fence post caps 3 are adapted to movably support the axles 4 such that they are movable along a line substantially normal to said longitudinal axis 6.

Figure 1 shows a section of animal barrier 1, and it will be appreciated that fence post caps like the one 3 shown in Figure 1 could be located at any number of fence posts along the length of a fence, and any number of rotating bodies 2 could be located there between. In addition, it would also be possible to have just one rotating body 2, and one fence post cap 3 at each end. Also, the fence post cap 3 shown in the Figures has axles 4 arranged on two opposite sides, but it will be appreciated that a fence post cap could be provided with axles 4 on two adjacent sides, which could be used at the corner of a fence.

As is shown in the Figures, the longitudinal axis 6 extends along the centre of the rotating bodies 2, which are cylindrical. The axles 4 rotatably support the rotating bodies 4, by being disposed in apertures (not visible) which are provided through the rotating bodies 2, and coincide with the axis 6. The rotating bodies 2 are disposed such that a clearance 8 between the top 9 of the fence 5 and the rotating bodies 2 is too small for a cat to breach.

The axles 4 are movably supported by the caps 3. The axles 4 are disposed in a socket 10 (as shown in Figures 2a to 2c) and can move back and forth along the socket 10. It will be appreciated that there are many known ways this motion can be achieved, but in animal barrier 1 the axles are provided with a circular base 11, which is disposed behind socket 10 to support the axles 4.

As is clear from Figures 2 a to 2c, the rotating bodies 2 are wider that the width of the fence 5. In addition, the socket 10 is dimensioned such that each rotating body 2 can move between a first position, as shown in Figure 2b, where a first side 12 is level with a first side 13 of the fence 5, and a second position, as shown in Figure 2c, where a second side 14 is level with a second side 15 of the fence 5.

As is clear from Figure 1, the fence post cap 3 is attached in use to a fence post 16, and as a result there is a space between the rotating bodies 2. Therefore, ball 17 is provided on the top 18 of the fence post cap 3, and similar balls can be provided on the top of other fence post caps disposed along the length of the fence 5.

The fence post cap 3 is screwed onto the top of the fence post 16 by means of screws (not visible).

In use, when an animal, for example a cat, attempts to scale the fence 5 it will contact a rotating body 2. As a result the rotating body 2 will rotate about the axis 6, and the cat will gain no purchase and slip off. In addition, the rotating body 2 may move back or forth as a result of the axles 4 being in sockets 10, which makes passing the animal barrier 1 even harder. In particular, if the cat attempts to scale the fence 5 from the first side 13, when the rotating body 2 is in the position shown in Figure 2c, the rotating body 2 will rotate on axis 6, and may move away from the cat, causing it to very readily fall back.

If a cat attempts to scale the first side 13 of the fence 5 when the rotating body 2 is in the position shown in Figure 2b, the above described linear movement may not occur, but because the first side 12 of the rotating body 2 is level with the first side 13 of the fence 5, there is still no manner in which an animal could gain access to the top 9 of the fence 5.

If an animal tries to pass over the fence 5 at the location of the fence post 16, it will not be able to pass over the ball 17.

The invention also includes a kit of parts for use in constructing an animal barrier device like that described above, in which the kit of parts comprises one or more elongate bodies and fixture means, which are retro-fltted to an existing fence to create an animal barrier device as described above. It will be appreciated how the rotating bodies 2 and the fence post caps 3 described above can be provided as a kit for fitting to an existing fence, and they therefore provide support for this aspect of the invention.

The embodiment could be altered without departing from the scope of Claim 1. For example, in an alternative embodiment (not shown) the axles 4 and/or the rotating bodies 2 could be provided with a bearing between them to improve the rotation movement of the rotating bodies 2.

In another alternative embodiment (not shown) the balls 17 could be replaced with tear-drop shaped elements comprising a generally ball-shaped portion, at a tapered top section. Such a shape can be even harder for an animal to scale.

The invention further includes an arrangement in which an animal barrier device as described above is integral with a construction. Therefore, in one other alternative embodiment (not shown) the animal barrier device 1 is integrally formed with the fence 5. In such an embodiment the axles 4 are provided as part of the fence post 16, and no fence post cap 3 is required.

Thus, an animal barrier is provided which provides an effective barrier for animals, in particular cats.

## Claims

1. An animal barrier device (1) comprising a construction (5), one or more elongate rotating bodies (2) and fixture means (3, 4) mounted on said construction (5), in which the fixture means (3, 4) support the one or more rotating bodies (2) such that they are rotatable on a longitudinal axis (6), **characterised in that** the fixture means (3, 4) comprises axle means (4) adapted to support the one or more rotating bodies (2) such that they are rotatable about a longitudinal axis (6) extending along their centre, and in which the fixture means (3, 4) further comprises base means (3) adapted to movably support the axle means (4) such that in use the axle means (4) are movable back and forth along a line substantially normal to said longitudinal axis (6).

2. An animal barrier device (1) as claimed in Claim 1 in which the construction (5) is a wall or fence (5).

3. An animal barrier device (1) as claimed in Claim 2 in which the animal barrier device (1) comprises a number of rotating bodies (2), which are arranged in a row along a top (9) of the wall or fence (5).

4. An animal barrier device (1) as claimed in Claim 3 in which each rotating body (2) is wider than the width of the wall or fence (5).

5. An animal barrier device (1) as claimed in Claim 4 in which the base means (3) movably supports the axle means (4) such that each rotating body (2) is movable between a first position where a first side (12) of the rotating body (2) is level with a first side (13) of the wall or fence (5), and a second position where a second side (14) of the rotating body (2) is level with a second side (15) of the wall or fence (5).

6. An animal barrier device (1) as claimed in Claim 5 in which the rotating bodies (2) are cylindrical.

7. An animal barrier device (1) as claimed in Claim 6 in which a clearance (8) between the top (9) of the wall or fence (5) and each rotating body (2) is too small for a cat to breach.

8. An animal barrier device (1) as claimed in Claim 7 in which the base means (3) comprises at least two base units (3), one at each end of each rotating body (2), and in which the axle means (4) comprises a spigot (4) extending from a base unit (3) which can co-operate with a socket at each end of each rotating body (2).

9. An animal barrier device (1) as claimed in Claim 8 in which the rotating bodies (2) are provided with a continuous aperture through their centre, such that the socket at each end of each rotating body (2) comprises the part of the aperture adjacent each end of the rotating body (2).

10. An animal barrier device (1) as claimed in Claim 9 in which the base units (3) are attached to the top (9) of the wall or fence (5) in a spaced apart manner, and the rotating bodies (2) are disposed there between.

11. An animal barrier device (1) as claimed in Claim 10 in which a top (18) of each base unit (3) is provided which a round or elliptical element (17) which is shaped or dimensioned such that a cat can not perch thereon.

12. An animal barrier device (1) as claimed in Claim 11 in which the base units (2) are attached to fence posts (16) which are spaced apart along the length of a fence (5).

13. An animal barrier device (1) as claimed in Claim 12 in which each base unit (3) comprises a fence post cap, provided with axle means (4) on at least one side and a round or elliptical element (17) on a top (18).

14. A kit of parts for use in constructing an animal barrier device (1), in which the kit of parts comprises one or more elongate rotating bodies (2) and fixture means (3, 4), in which the kit of parts is adapted to form a part of an animal barrier device (1) comprising a construction (5), one or more elongate rotating bodies (2) and fixture means (3, 4) mounted on said construction (5), in which the fixture means (3, 4) support the one or more rotating bodies (2) such that they are rotatable on a longitudinal axis (6), **characterised in that** the fixture means (3, 4) comprises axle means (4) adapted to support the one or more rotating bodies (2) such that they are rotatable about a longitudinal axis (6) extending along their centre, and in which the fixture means further comprises base means (3) adapted to movably support the axle means (4) such that in use the axle means (4) are movable back and forth along a line substantially normal to said longitudinal axis (6).

## Patentansprüche

1. Tiersperrenvorrichtung (1) umfassend einen Aufbau (5), einen oder mehrere längliche Rotationskörper (2) und an dem Aufbau (5) angebrachte Befestigungsmittel (3, 4), wobei die Befestigungsmittel (3, 4) die einen oder mehreren Rotationskörper (2) lagern, so dass die diese um eine Längsachse (6) rotierbar sind, **dadurch gekennzeichnet, dass** die Befestigungsmittel (3, 4) Achsenmittel (4) umfassen, welche eingerichtet sind, um die einen oder mehreren Rotationskörper (2) so zu lagern, dass diese um eine sich entlang ihres Zentrums erstreckende Längsachse (6) rotierbar sind, und wobei die Befestigungsmittel (3, 4) weiter Basismittel (3) umfassen, welche eingerichtet sind, um die Achsenmittel (4) so bewegbar zu lagern, dass bei der Verwendung die Achsenmittel (4) entlang einer im wesentlichen senkrecht zu der Längsachse (6) verlaufenden Linie vor- und zurückbewegbar sind.

2. Tiersperrenvorrichtung (19 nach Anspruch 1, wobei der Aufbau (5) eine Wand oder ein Zaun (5) ist.

3. Tiersperrenvorrichtung (1) nach Anspruch 2, wobei die Tiersperrenvorrichtung (1) eine Anzahl von Rotationskörpern (2) umfasst, welche in einer Reihe entlang einem oberen Ende (9) der Wand oder des Zauns (5) angeordnet sind.

4. Tiersperrenvorrichtung (1) nach Anspruch 3, wobei jeder Rotationskörper (2) breiter als die Breite der Wand oder des Zauns (5) ist.

5. Tiersperrenvorrichtung (1) nach Anspruch 4, wobei die Basismittel (3) die Achsenmittel (4) so bewegbar lagern, dass jeder Rotationskörper (2) zwischen einer ersten Stellung, in der eine erste Seite (12) des Rotationskörpers (2) auf gleicher Ebene wie eine erste Seite (13) der Wand oder des Zauns (5) ist, und einer zweiten Stellung, in der eine zweite Seite (14) des Rotationskörpers (2) auf gleicher Ebene wie eine zweite Seite (15) der Wand oder des Zauns (5) ist, bewegbar ist.

6. Tiersperrenvorrichtung (1) nach Anspruch 5, wobei die Rotationskörper (2) zylindrisch sind.

7. Tiersperrenvorrichtung (1) nach Anspruch 6, wobei ein Freiraum (8) zwischen der oberen Seite der Wand oder des Zauns (5) und jedem Rotationskörper (2) zu klein ist, um von einer Katze durchbrochen zu werden.

8. Tiersperrenvorrichtung (1) nach Anspruch 7, wobei die Basismittel (3) mindestens zwei Basiseinheiten (3) umfassen, eine an jedem Ende jedes Rotationskörpers (2), und wobei die Achsenmittel (4) einen sich von einer Basiseinheit (3) erstreckenden Zapfen (4) umfassen, welcher mit einem Sitz an jedem Ende eines jeden Rotationskörpers (2) kooperiert.

9. Tiersperrenvorrichtung (1) nach Anspruch 8, wobei die Rotationskörper (2) mit einer durch ihr Zentrum verlaufenden kontinuierlichen Öffnung versehen sind, so dass der Sitz an einem jeden Ende eines jeden Rotationskörpers (2) den Teil der Öffnung nahe einem jeden Ende des Rotationskörpers (2) umfasst.

10. Tiersperrenvorrichtung (1) nach Anspruch 9, wobei die Basiseinheiten (3) am oberen Ende der Wand oder des Zauns (5) in einer räumlich voneinander beabstandeten Weise angebracht sind, und die Rotationskörper (2) dazwischen angeordnet sind.

11. Tiersperrenvorrichtung (1) nach Anspruch 10, wobei ein oberes Ende jeder Basiseinheit (3) mit einem runden oder elliptischen Element (17) versehen ist, welches so geformt oder dimensioniert ist, dass eine Katze nicht darauf sitzen kann.

12. Tiersperrenvorrichtung (1) nach Anspruch 11, wobei die Basiseinheiten (3) auf Zaunpfosten (16) angebracht sind, welche entlang der Länge eines Zauns (5) voneinander beabstandet angeordnet sind.

13. Tiersperrenvorrichtung (1) nach Anspruch 12, wobei die Basiseinheiten (3) eine mit Achsenmittel (4) auf zumindest einer Seite und einem runden oder elliptischen Element (17) auf einer Oberseite (18) versehene Zaunpfostenabdeckung umfassen.

14. Bausatz von Teilen zur Verwendung in einem Aufbau einer Tiersperrenvorrichtung (1), wobei der Bausatz von Teilen einen oder mehrere längliche Rotationskörper (2) und Befestigungsmittel (3, 4) umfasst, wobei der Bausatz von Teilen eingerichtet ist, um einen Teil einer Tiersperrenvorrichtung (2) zu bilden, welche einen Aufbau (5), einen oder mehrere längliche Rotationskörper (2) und an dem Aufbau (5) befestigte Befestigungsmittel (3, 4) umfasst, wobei die Befestigungsmittel (3, 4) den einen oder die mehreren Rotationskörper (2) so lagern, dass sie um eine Längsachse (6) rotierbar sind, **dadurch gekennzeichnet, dass** die Befestigungsmittel (3, 4) Achsenmittel (4) umfassen, welche eingerichtet sind, um den einen oder die mehreren Rotationskörper (2) so zu lagern, dass sie entlang einer sich längs ihres Zentrums erstreckenden Längsachse (6) rotierbar sind, und wobei die Befestigungsmittel weiterhin Basismittel (3) umfassen, die eingerichtet sind, um die Achsenmittel (4) so bewegbar zu lagern, dass bei der Verwendung die Achsenmittel (4) längs einer im wesentlichen senkrecht auf der Längsachse (6) stehenden Linie vorwärts und rückwärts bewegbar sind.

## Revendications

1. Dispositif de barrière pour animaux (1), comprenant une construction (5), un ou plusieurs corps rotatifs allongés (2) et des moyens de support (3, 4) montés sur ladite construction (5), les moyens de support (3, 4) supportant le ou les corps rotatifs (2) de telle sorte qu'ils puissent tourner sur un axe longitudinal (6), **caractérisé en ce que** les moyens de support (3, 4) comprennent des moyens formant axe (4) adaptés pour supporter le ou les corps rotatifs (2), de telle sorte qu'ils puissent tourner autour d'un axe longitudinal (6) passant par leur centre, et les moyens de support (3, 4) comprenant de plus des moyens formant base (3) adaptés pour supporter, de façon à ce qu'ils puissent se déplacer, les moyens formant axe (4) de telle sorte que, lors de l'utilisation, les moyens formant axe (4) puissent se déplacer vers l'arrière et vers l'avant le long d'une ligne sensiblement normale audit axe longitudinal (6).

2. Dispositif de barrière pour animaux (1) selon la revendication 1, dans lequel la construction (5) est une paroi ou une clôture (5).

3. Dispositif de barrière pour animaux (1) selon la revendication 2, dans lequel le dispositif de barrière pour animaux (1) comprend un certain nombre de corps rotatifs (2), qui sont agencés en une rangée le long d'un sommet (9) de la paroi ou de la clôture (5).

4. Dispositif de barrière pour animaux (1) selon la revendication 3, dans lequel chaque corps rotatif (2) est plus large que la largeur de la paroi ou de la clôture (5).

5. Dispositif de barrière pour animaux (1) selon la revendication 4, dans lequel les moyens formant base (3) supportent, de façon à ce qu'ils puissent se déplacer, les moyens formant axe (4) de telle sorte que chaque corps rotatif (2) puisse se déplacer entre une première position dans laquelle un premier côté (12) du corps rotatif (2) est de niveau avec un premier côté (13) de la paroi ou de la clôture (5), et une deuxième position dans laquelle un deuxième côté (14) du corps rotatif (2) est de niveau avec un deuxième côté (15) de la paroi ou de la clôture (5).

6. Dispositif de barrière pour animaux (1) selon la revendication 5, dans lequel les corps rotatifs (2) sont cylindriques.

7. Dispositif de barrière pour animaux (1) selon la revendication 6, dans lequel un espacement (8) entre le sommet (9) de la paroi ou de la clôture (5) et chaque corps rotatif (2) est trop petit pour qu'un chat puisse passer.

8. Dispositif de barrière pour animaux (1) selon la revendication 7, dans lequel les moyens formant base (3) comprennent au moins deux unités de base (3), à raison d'une à chaque extrémité de chaque corps rotatif (2), et dans lequel les moyens formant axe (4) comprennent un tourillon (4) s'étendant à partir d'une unité de base (3), qui peut coopérer avec une douille à chaque extrémité de chaque corps rotatif (2).

9. Dispositif de barrière pour animaux (1) selon la revendication 8, dans lequel les corps rotatifs (2) sont munis d'une ouverture continue passant par leur centre, de telle sorte que la douille à chaque extrémité de chaque corps rotatif (2) comprenne la partie de l'ouverture adjacente à chaque extrémité du corps rotatif (2).

10. Dispositif de barrière pour animaux (1) selon la revendication 9, dans lequel les unités de base (3) sont fixées au sommet (9) de la paroi ou de la clôture (5) d'une façon mutuellement espacée, et les corps rotatifs (2) sont disposés entre celles-ci.

11. Dispositif de barrière pour animaux (1) selon la revendication 10, dans lequel un sommet (18) de chaque unité de base (3) est muni d'un élément rond ou elliptique (17) qui est conformé ou dimensionné de telle sorte qu'un chat ne puisse pas se percher sur celui-ci.

12. Dispositif de barrière pour animaux (1) selon la revendication 11, dans lequel les unités de base (2) sont fixées à des poteaux de clôture (16) qui sont espacés les uns des autres le long de la longueur d'une clôture (5).

13. Dispositif de barrière pour animaux (1) selon la revendication 12, dans lequel chaque unité de base (3) comprend un capuchon de poteau de clôture, muni de moyens formant axe (4) sur au moins un côté et d'un élément rond ou elliptique (17) sur un sommet (18).

14. Ensemble de pièces destiné à être utilisé pour construire un dispositif de barrière pour animaux (1), l'ensemble de pièces comprenant un ou plusieurs corps rotatifs allongés (2) et des moyens de support (3, 4), l'ensemble de pièces étant adapté pour faire partie d'un dispositif de barrière pour animaux (1) comprenant une construction (5), un ou plusieurs corps rotatifs allongés (2) et des moyens de support (3, 4) montés sur ladite construction (5), les moyens de support (3, 4) supportant le ou les corps rotatifs (2) de telle sorte qu'ils puissent tourner sur un axe longitudinal (6), **caractérisé en ce que** les moyens de support (3, 4) comprennent des moyens formant axe (4) adaptés pour supporter le ou les corps rotatifs (2) de telle sorte qu'ils puissent tourner autour d'un axe longitudinal (6) passant par leur centre, et les moyens de support comprenant de plus des moyens formant base (3) adaptés pour supporter, de façon à ce qu'ils puissent se déplacer, les moyens formant axe (4) de telle sorte que, lors de l'utilisation, les moyens formant axe (4) puissent se déplacer vers l'arrière et vers l'avant le long d'une ligne sensiblement normale audit axe longitudinal (6).
